# EUROPEAN PATENT APPLICATION

(11) **EP 2 869 657 A1**
(43) Date of publication of application: **06.05.2015**
(21) Application number: 13306485.7
(22) Date of filing: 30.10.2013
(51) Int. Cl.: H04W 76/02, H04W 74/08

(54) **Allocation of Communication Resources for Device to Device Wireless Communication**

(71) Applicant: ALCATEL LUCENT, 92100 Boulogne-Billancourt (FR)
(72) Inventor: Lim, Seau Sian, Swindon, Wiltshire SN5 7DJ (GB); Palat, Sudeep Kumar, Swindon, Wiltshire SN5 7DJ (GB); Cheng, Fang-Chen, New Jersey, 07974-0636 (US)
(74) Representative: Coghlan, Judith Elizabeth Kensy

(57) **Abstract**

A method computer program produce and user equipment for broadcasting data for receipt by at least one further user equipment are provided. The method comprises the steps of: selecting a preamble from a plurality of preambles, said plurality of preambles each identifying a corresponding block of transmission resources said block of transmission resources comprising at least one corresponding communication channel; transmitting a preamble signature of said selected preamble on a preamble channel, transmission of said preamble signature indicating to said at least one further user equipment that said user equipment intends to transmit data on said at least one corresponding communication channel indicated by said preamble signature, each of said channels comprising half duplex channels configured to transmit data in one direction at one time; and monitoring for signals received via said at least one corresponding communication channel; and in response to detecting one of, a preamble response signal or no signal during a predetermined time on said at least one corresponding communication channel transmitting said data on said at least one corresponding communication channel.

## Description

### FIELD OF THE INVENTION

The present invention relates to the allocation of communication resources to devices that communicate across a wireless network.

### BACKGROUND

For device to device communication using wireless communication signals the channel, that is, the time-frequency resource which the signal is to be transmitted over, should, where possible, be allocated to the device transmitting the signal to avoid signal collision.

There are two conventional methods of resource allocation, namely coordinated access and uncoordinated access:
- Coordinated access
   In such an access scheme, there exists a cluster head which acts as a resource allocation controller. In network coverage case, the cluster head can either be the eNB or a dispatcher. While in the out-of-coverage public safety case, the cluster head is the dispatcher.
- Uncoordinated access
   Such access scheme allows the UE (user equipment) to autonomously allocate resources to itself from a pool of semi-statically configured resource blocks. As it is uncoordinated, the resources allocated are in contention as another UE may allocate itself the same resources.

Coordinated access is reasonably straightforward as it is centrally managed via an access point to the network, channels can be dedicated to particular devices and collisions can be avoided.

With uncoordinated access however, things are not as straight forward. Uncoordinated access becomes important though in device to device communication where network coverage may not be available, such that the central management of the access may be difficult or not possible. In such a scheme, one way to reduce collisions is for the device to detect potential collisions and avoid them where it can.

Examples of such schemes are CSMA (carrier sense multiple access), CSMA/CA (collision avoidance) and CSMA/CD (collision detection). A pure CSMA will result in high collision and low throughput because it is quite likely two users may try to transmit at the same time. CSMA/CA and CSMA/CD are used to reduce collisions. In CSMA/ CD, the transmitting node listens to the carrier that it is transmitting to detect any collision. If it detects a collision, it will stop transmitting and perform a random (exponential) backoff. In CSMA/CA, the transmitting node (i.e. STA) sends a Request-to-send (RTS) after detecting the carrier is not used and the receiving node (i.e. WLAN AP) responds to the transmitting node with a Clear-to-send (CTS) signal, if no other node is using the same carrier and the transmitting node transmits upon receiving the CTS. In this case only 1 node may use the carrier at any one time. If the transmitting node does not receive a CTS for a period of time, it will perform a random backoff. Transmission is performed in its entirety and the receiving node will provide an ACK if it received the transmission. If no ACK is received, the transmitting node will assume collision and perform another random backoff.

In device to device D2D communication using half duplex links a UE can only transmit or receive on a particular channel at any one time. Hence CSMA/ CD cannot be used for collision handling. It has also been agreed that a D2D link is a broadcast link (i.e. many valid users will try to receive the transmitting message). This makes it difficult to perform a conventional CSMA/ CA as it is hard to decide which device should send the CTS and ACK to perform a complete CSMA/ CA in a no cluster head case.

In a typical broadcast mechanism, the transmitting UE needs to announce to the potential receiving UEs that it is going to broadcast a message and also the time-frequency resources that is going to use for this message. However, in order to make this announcement in a half duplex system, the transmitting UE will have to secure another time-frequency resources to do so. Thus, the allocation of resources and the avoidance or at least reduction of collisions in such device to device communication is not straightforward.

Accordingly, it is desired to provide a system for allocating communication resources for uncoordinated device to device communication that reduces collisions.

### SUMMARY

According to a first aspect, there is provided a method of broadcasting data from one user equipment for receipt by at least one further user equipment comprising the steps of: selecting a preamble from a plurality of preambles, said plurality of preambles each identifying a corresponding block of transmission resources said block of transmission resources comprising at least one corresponding communication channel; transmitting a preamble signature of said selected preamble on a preamble channel, transmission of said preamble signature indicating to said at least one further user equipment that said user equipment intends to transmit data on said at least one corresponding communication channel indicated by said preamble signature, each of said channels comprising half duplex channels configured to transmit data in one direction at one time; and monitoring for signals received via said at least one corresponding communication channel; and in response to detecting one of, a preamble response signal or no signal during a predetermined time on said at least one corresponding communication channel transmitting said data on said at least one corresponding communication channel.

The present invention recognises that when broadcasting data from one user equipment to another, if there is no coordinated control, perhaps because there is no network coverage, then the probability of collisions may be quite high unless this is managed in some way. The present invention addresses this by providing transmission resources in blocks having preambles associated with communication channels and using the preamble to indicate that user equipment intends to use the corresponding communication channel(s). Having this channel association allows systems where channels are used to transmit data in one direction only, such that data can either be transmitted or received by user equipment at any one time on that channel, to indicate to other devices in the area by transmitting a preamble signature on the preamble channel indicating the associated communication channel is required for use. Although the user equipment cannot listen for signals on the preamble channel at the same time as it transmits signals on this channel, it can listen to the associated communication channel(s) and determine from that, information that indicates the likelihood of that channel being available for use. Where the monitoring of the communication channel indicates to the user equipment that it is likely that this resource block indicated by the preamble is available for use then the data can be transmitted on the corresponding communication channel. In some cases this information may be a preamble response signal or no signal for a predetermined time.

In some embodiments, each of said channels comprises a time frequency resource.

The block of transmission resources represented by each preamble is made up of at least one corresponding communication channel. These channels may be in the form of a frequency transmission band and a time period during which this can be used.

In some embodiments, said step of transmitting said data is performed in response to detecting one of said preamble response signals.

In one embodiment, the detection of a preamble response signal may be the indication required by the user equipment that it is likely that the transmission resource block indicated by the preamble it has selected is available for use and in which case the user equipment will transmit the data in the next time slot.

In an alternative embodiment, said step of transmitting said data is performed in response to detecting no signal during a predetermined time.

In some cases, the devices may not be configured to respond to the preamble signatures and in such case the device may instead detect that the communication channel is not currently being used during a certain time period.

In some embodiments, said method comprises a further step of setting said predetermined time to one of a plurality of values, said plurality of values depending on a desired quality of service.

The predetermined time during which the communication channel or channels is monitored can be selected from a number of different values and may depend upon a desired quality of service. In this regard, there may not be a single value for a particular quality of service; rather, if a certain quality of service is desired then a range of values can be provided and the device will select randomly or quasi-randomly from this pool of values. In this way devices will not generally select exactly the same predetermined time and this reduces the probability of them both monitoring the same communication channel during the same time period while they both transmit preambles on the same preamble channel. Some overlap due to different time periods will enable one of them to detect the other starting to transmit data and will cause that one to not transmit its data thereby avoiding a collision.

In some embodiments, in response to detecting a signal on said communication channel, ceasing to transmit said preamble signature on said preamble channel for a backoff time, and following said backoff time transmitting said preamble signature on said preamble channel again and monitoring for signals on said at least one communication channel.

In the case that a signal is detected on the communication channel, the user equipment will understand that the transmission resource block of the selected preamble is currently being used. In this case it may cease to transmit the preamble signature on this channel for a backoff time and then try again. In an alternative embodiments it may simply select a different preamble. It should be noted that the backoff time can be a set time or it can be selected randomly or quasi-randomly.

In some embodiments, said step of transmitting said data is performed in response to detecting said response signal, transmitting said data in a next predetermined communication time slot.

In some embodiments, said method comprises the step of: in response to not detecting said response signal within a predetermined detection time, not transmitting said preamble signature for a backoff time and following said backoff time re-transmitting said preamble signature on said preamble channel again and monitoring for signals on said at least one communication channel.

Similarly to the embodiment where the communication channel is monitored for a predetermined time and a signal is detected, where the communication channel is monitored for a preamble response signal and no response signal is detected, then again the user equipment will backoff and send the preamble again later.

In some embodiments, said method comprises continuing to transmit said preamble signature via said preamble channel while said data is transmitted via said at least one communication channel and stopping transmitting said preamble following transmission of said data to release said corresponding communication channel.

The user equipment may continue to transmit the preamble signature while it transmits the data and this indicates to other user equipment that this transmission resource block is currently being used and that they should not use it themselves. It releases the channels by stopping sending the preamble.

In some embodiments, said step of selecting said preamble comprises selecting one of said plurality of preambles in dependence upon one of: a collision probability stored associated with at least some of said plurality of preambles; an availability of said corresponding preamble channels; an application to be performed; or an identity of said user equipment.

The selection of the preamble may be done in dependence on a number of things. It may be done randomly from a pool of available preamble channels, it may be done in dependence on a collision probability that is associated with the preambles indicating the likelihood of that transmission resource block being available, alternatively a preamble may be specific to a particular application to be performed, in which case a preamble may be selected in this way, or a user equipment may have a specific preamble that is associated with its identity and therefore this preamble maybe selected.

In some embodiments, said method comprises a step of monitoring at least one of said preamble channel and marking said preamble channel currently being used as being unavailable prior to selecting said one of said plurality of preambles, said selecting step comprising selecting said preamble from said plurality of preambles that are not currently marked as unavailable.

The user equipment may monitor the preamble channel(s) to determine whether they are currently available and it may mark those that are currently being used as unavailable, such that it does not select them when selecting a transmission resource block. If other user equipment in the area are configured in the same way, then the transmission of a preamble signature on a preamble channel will indicate to the user equipment in the area that that transmission resource block indicated by the preamble signature is currently being used and the other user equipment will avoid using it, having detected the preamble signature.

In some embodiments, said method comprises the further steps of: monitoring at least one of said preamble channels; and in response to detecting a preamble signature indicating the transmission of data in which said user equipment is interested, monitoring said corresponding communication channels.

In addition to broadcasting data to local user equipment, the user equipment may also be configured to receive data broadcast by other user equipment in its area. Thus, as well as monitoring the preamble channels to determine which are available, it will also determine whether there is a preamble signature currently being transmitted which indicates that data that it is interested in will be transmitted on the corresponding communication channel. If it does detect such a preamble then it will monitor the corresponding communication channel to receive the data.

In some cases, prior to monitoring the corresponding communication channel it will respond to the preamble signature indicating to the user equipment that transmitted that preamble signature that it has received the preamble signature and therefore the transmission resource block is probably not being used by another device and it is interested in receiving the data It should be noted that multiple user equipments might respond to the preamble signature using the same corresponding communication channel and these multiple responses will collide. It is only necessary for a user equipment transmitting the preamble signature to detect that at least one other receiving device responds and this is possible even when the responses collide.

A second aspect of the present invention provides a computer program product storing a computer program which, when executed by a computer, controls said computer to perform steps in the method according to a first aspect of the present invention.

A third aspect of the present invention provides a user equipment configured to communicate wirelessly with at least one further user equipment, said user equipment comprising: a preamble store for storing details of a plurality of preambles and corresponding transmission resource blocks; preamble selection logic for selecting a preamble from said plurality of stored preambles, said plurality of preambles each being associated with a corresponding block of transmission resources, said block of transmission resources comprising at least one corresponding communication channel; a port for receiving signals and outputting signals on one of a plurality of channels, said port being a half duplex port such that for each channel a signal can either be received or transmitted; said user equipment being configured to broadcast data for receipt by said at least one further user equipment by: selecting a preamble from said plurality of preambles using said preamble selection logic; transmitting a preamble signature of said selected preamble via said port on a preamble channel, transmission of said preamble signature indicating to said at least one further user equipment that said user equipment intends to transmit data on said at least one corresponding communication channel; and detecting signals received on said at least one corresponding communication channel; and in response to detecting either a preamble response signal or no signal during a predetermined time, transmitting said data on said at least one corresponding communication channel.

### BRIEF DESCRIPTION OF THE DRAWINGS

Embodiments of the present invention will now be described further, with reference to the accompanying drawings, in which:
Figure 1 schematically shows user equipment communicating with each other;
Figure 2 shows signals sent from and received by a user equipment according to an embodiment of the present invention;
Figures 3a and 3b show signals sent from and received by a user equipment according to a further embodiment of the present invention;
Figure 4 shows a flow diagram illustrating steps in a method according to one embodiment; and
Figure 5 shows a flow diagram illustrating steps in a method according to a further embodiment.

### DESCRIPTION OF THE EMBODIMENTS

### Overview

Before discussing the embodiments in any more detail, first an overview will be provided.

Embodiments of the present technique provide the ability for user equipment to communicate directly with each other without the need for coordinated control or even network coverage, in a way that reduces the probability of collisions occurring. This is done by the use of preambles which identify a preamble channel that is used to transmit a preamble message and at least one corresponding communication channel which are used in association with the preamble channel to transmit data. In such user equipment, the transmission and reception of data may be done in a half duplex manner such that data can either be transmitted on a channel or received on that channel at any one time. This makes is difficult to both transmit information and determine whether there is other information currently being transmitted on that channel. By providing transmission resource blocks which have preamble channels and associated communication channels this problem can be addressed.

Each user equipment wishing to broadcast a message to other user equipment in the area can transmit a preamble on a selected preamble channel and this will indicate to other user equipment that data is going to be transmitted on the at least one corresponding communication channel, and also that the current user equipment wishes to use this resource block of preamble channel and communication channel and therefore other user equipment should avoid using it for the current time.

A user equipment detecting a preamble on a preamble channel and recognising that the message that is to be transmitted on the communication channel is of interest to it will then monitor the communication channel such that it can receive that message.

In order to reduce the number of potential collisions, the transmitting equipment will transmit the preamble on a preamble channel and will monitor the corresponding communication channel. As noted previously, it cannot transmit on the preamble channel and monitor the preamble channel at the same time as these are half duplex channels such that only transmission or reception can be done by the user equipment at any one time on any one channel. The user equipment will therefore monitor the corresponding communication channel and, if during a predetermined time it detects no signals on this channel, or if it detects at least one response from another user equipment indicating that it has received the preamble and wishes to receive the data, it will then transmit the data on the corresponding communication channel.

In the case that the user equipment listens for no signal on the communication channel for a predetermined time, the predetermined time may be set according to the quality of service required. Clearly, a longer time will provide a decreased probability of collision. The time will be set in an at least quasi random manner, in that although a longer time may be selected for a higher quality of service, this longer time may be one of several values such that different user equipment do not listen for exactly the same time.

Each user equipment will store a set of preambles and their corresponding resource blocks. These resource blocks will identify the communication channel. These channels may be time frequency resources. Along with the channel information, the preamble may also store information indicating whether or not a channel is currently available. In this respect, the user equipment will monitor the preamble channel(s) and, when it detects one is currently in use, will mark the channel as unavailable, reducing the probability of it selecting it. Furthermore, in some cases, when in contact with the network the user equipment will receive updates on the use of the channels and will set a probability of whether or not a user equipment should transmit at a certain time. The probability will indicate the likelihood of the preamble channel being in use and, thus, using the probability as a guide of when to transmit will reduce the probability of transmitting on the preamble channel at the same time as another device.

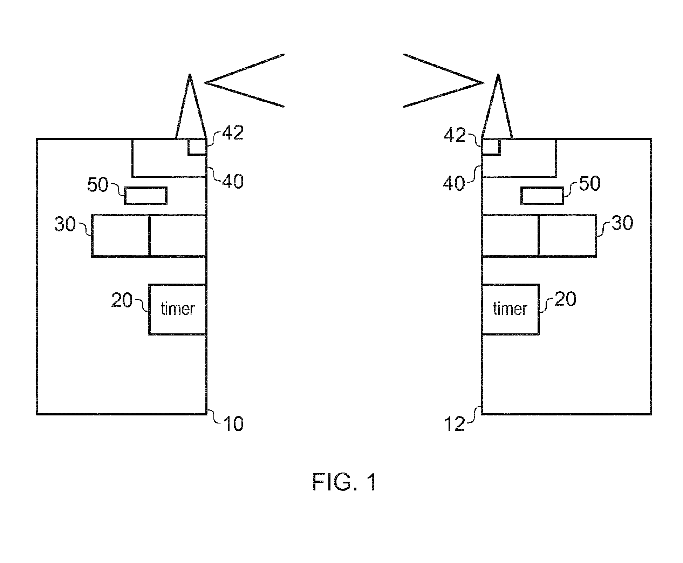

Figure 1 shows schematically two user equipment devices 10 and 12 communicating with each other wirelessly. Each device comprises a timer 20, a data store 30 and communication circuitry 40 which communicates wirelessly via port 42 which is a half duplex port being able to either receive or transmit on a particular channel at any particular time. There is also control circuitry 50 which controls the communication circuitry and, in particular, the channel that it is currently transmitting or receiving on.

Within data store 30 there is stored a set of preambles which act as signatures for identifying resources blocks. Alongside each preamble are details of the resource that it corresponds to and an indication of whether or not that preamble is known to be currently unavailable, and in some cases a probability of how likely it is that that preamble is currently in use.

On receipt of a request from a user to perform device-to-device communication, control circuitry 50 will select a preamble from those marked as available in the preamble store and will transmit the preamble in the form of a preamble signature along the channel corresponding to that preamble. This preamble signature will indicate the corresponding communication channel or channels, the type of data to be communicated and it may also have some synchronisation information associated with it. The user equipment will monitor the communication channel or channels corresponding to the preamble, to determine whether any signals are received on that channel.

In one embodiment, the user equipment will monitor the communication channel for a predetermined time that is timed by timer 20 and if no signal is received during this time it will then transmit data on the corresponding communication channel. It should be noted that as well as information regarding the corresponding communication channel and synchronisation information, the preamble will also provide some indication of the message that is to be sent on the communication channel.

Thus, any user equipment that is within range of user equipment 10 (for example, user equipment 12) can be monitoring the preamble channels, and on detecting a preamble that indicates there is a message in which the device is interested it will monitor the communication channel indicated by the preamble being transmitted on the preamble channel and will be able to receive the data. If it is not interested in the particular data being sent it will not monitor the communication channel for that data; it will, however, mark the preamble and corresponding communication channel as currently unavailable and will not use them.

It should be noted that for the whole time that the user equipment 10 transmits the data it will also transmit the preamble on the preamble channel such that any user equipment detecting the preamble channel will understand that the corresponding communication channel is currently in use.

In another embodiment, rather than the user equipment 10 monitoring the communication channel for a predetermined time prior to transmitting the data, it will instead monitor it for a response signal. In some embodiments, this response signal will take the form of the preamble signature that was sent, such that the device recognises that the user equipment is responding to that particular preamble. It should be noted that there may be many responses sent from different user equipment in the area which wished to receive the data. Once the response signal has been received then the user equipment will transmit the data along this communication channel in the next time slot. In this regard, the synchronisation information provided within the preamble will give some indication to the receiving user equipment of when a time slot will start, such that the user equipment can receive this data.

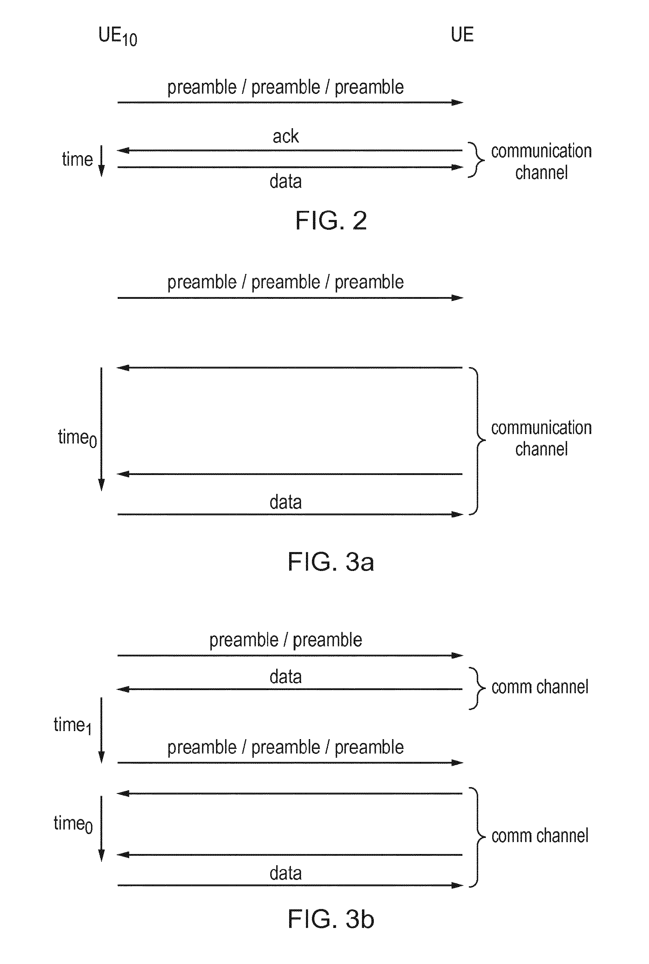

Figure 2 shows an example of signals sent from user equipment 10 to any other user equipment in the area. Thus, on the preamble channel the preamble signature is sent continuously whilst the communication channel is monitored. In this case, an acknowledgement signal is received on the communication channel and, following that acknowledgement, the user equipment 10 will transmit the data.

Figure 3A shows an alternative embodiment where, again, user equipment 10 will continuously send preambles on the preamble channel indicating that it wishes to use the corresponding communication channel or channels and therefore that other user equipment should avoid using them, and also indicating the type of message it is to send, such that other user equipment that are interested in this message can tune to the corresponding channel or channels. In this case, the transmitting user equipment 10 will monitor the communication channel for a predetermined time, time0, and if during this time no signal is received it will then transmit the data to any user equipment in the area.

Figure 3B shows an alternative embodiment where the user equipment is transmitting the preamble and during the time, time0, detects data on the communication channel. In this case, the user equipment will back off; that is, it will stop transmitting the preamble for a certain length of time, and following this time will again transmit the preamble and monitor the communication channel. If it determines during a period of time, which in this case is time1, that there is no signal on the communication channel it will then transmit the data. The predetermined time, time1, is similar in length to time0, but has been selected to be slightly different in a quasi-random manner to avoid user equipment always looking at the communication channel for the same length of time which would increase the probability of two user equipment wishing to use the same channel, both listening for the same time and then both trying to transmit data together.

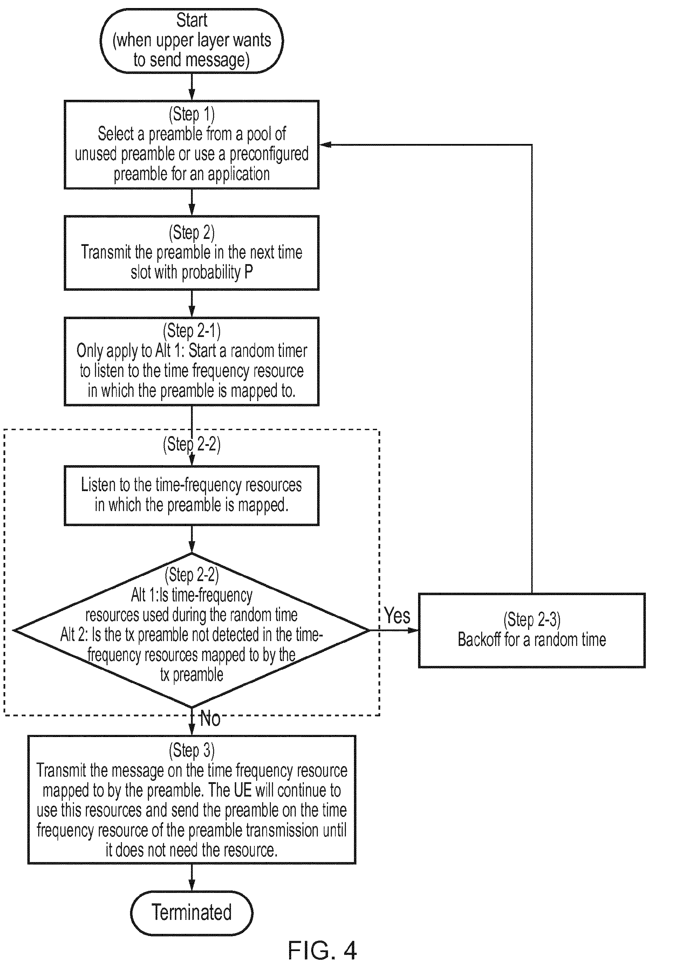

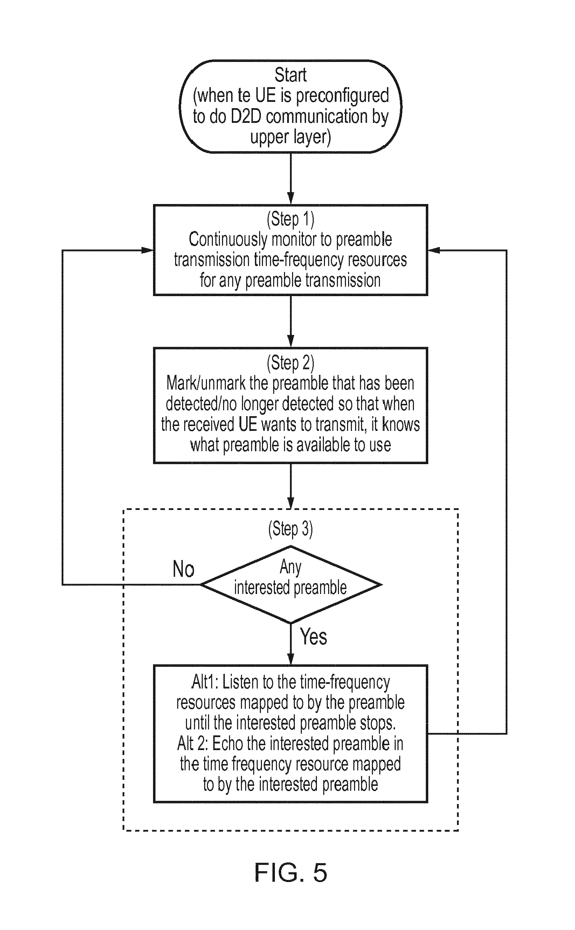

Figure 4 shows the steps performed by user equipment 10 when wishing to broadcast a message to another local device.
Step 1: The UE selects a preamble for transmission. It may select it randomly from a pool of available preambles, or it may select it in dependence upon probability information if that is stored in association with the preambles and in some cases is updated when the user equipment has network coverage, or it may take a pre-assigned preamble, which may be pre-assigned to the type of data or message to be sent, or it may be pre-assigned to the user equipment itself. Each of the preambles is mapped to a transmit time-frequency resources for transmitting broadcast message. This mapping information can be preconfigured or can be calculated from the preamble. In the case that the preamble is randomly selected, the transmitting UE will only select from the pool of preambles that are not used (See the receiving protocol in Figure 5 for the detection of preambles that are used and not used).
Step 2: The preamble is transmitted on the time-frequency resource for preamble transmission. Where the preamble has been selected in dependence upon probability the user equipment will transmit the preamble at the next slot that has the required probability associated with it to reduce the collision probability.

The next step can be performed in one of two ways.

Alternative 1, that is step 2-1: a random timer is started for monitoring the time-frequency resource mapped to by the preamble. This random timer can be set according to the QoS of the message to be sent. That is the value will be selected randomly or quasi-randomly from a range of values determined by the QoS.

Step 2-2: Once the transmitting UE sends the preamble, it will first monitor the time-frequency resources in which the broadcast message will be sent. The preamble is like the RTS (request to send) in the CSMA. If the time-frequency resources mapped to by the preamble is silent (i.e.no detection of any message being sent) during the running of the random timer, it means that the transmitting UE is clear to transmit in the time-frequency resources (just like the CTS in CSMA). The transmitting UE shall keep sending the preamble during the monitoring time.

Step 2-3: If the UE detects that the time frequency resources mapped to by the preamble is busy during one of the instance in the random time, the transmitting UE will backoff for a random period of time and attempt to retransmit again after the backoff.

Alternative 2: that is step 2-2: The transmitting UE monitors any preamble signal in the time-frequency resource mapped to by the transmitted preamble

Step 2-2: If the UE detects the preamble signal (including accumulation/ soft combining of the signals from the different receiving UEs) at the time-frequency resource mapped to by the transmitted preamble (this is like an ACK or CTS in CSMA), the transmitting UE assumes that it can send the broadcast message in the next time slot. The transmitting UE shall keep sending the preamble when it is sending the broadcast message to indicate to other UEs it is using the time-frequency resource that the preamble is mapped to. It only stops transmitting the preamble once it wants to release the resource.

Step 2-3: If the UE does not detects any preamble signal at the time-frequency resource mapped to by the transmitted preamble (this is like a NACK or no CTS), the transmitting UE shall assume that there is a collision on the preamble transmission and perform a random backoff and attempt to retransmit again after the backoff.

For both alternatives, step 3 is then performed: The transmitting UE will send the broadcast message in the time frequency resources mapped to by the preamble. As long as the UE wants to use the time-frequency resources, it will continue to send the preamble in the time-frequency resource of the preamble transmission.

Figure 5 shows the receiving protocol, comprising the following steps:
Step 1: Receiving UE always monitors the time-frequency resources for the announcement or the preamble.
Step 2: If it detects a preamble, it will avoid using the preamble and the time-frequnecy resources being mapped to by the preamble to send broadcast message until the preamble stops being used.

### Alternative 1:

Step 3: If it is interested in a detected preamble, it will start listening to the time-frequency resource being mapped to by the preamble and decode the broadcast message if it receives one until the preamble is not detected anymore.

### Alternative 2:

Step 3: If it is interested in a detected preamble, it will echo the preamble in the time-frequency resource being mapped to by the preamble of interest. This will provide the ACK/CTS to the transmitting UE causing it to transmit the broadcast message in the next time slot.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the Figures, including any functional blocks labelled as "processors" or "logic", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" or "logic" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/ or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. A method of broadcasting data from one user equipment for receipt by at least one further user equipment comprising the steps of:
selecting a preamble from a plurality of preambles, said plurality of preambles each identifying a corresponding block of transmission resources said block of transmission resources comprising at least one corresponding communication channel;
transmitting a preamble signature of said selected preamble on a preamble channel, transmission of said preamble signature indicating to said at least one further user equipment that said user equipment intends to transmit data on said at least one corresponding communication channel indicated by said preamble signature, each of said channels comprising half duplex channels configured to transmit data in one direction at one time; and
monitoring for signals received via said at least one corresponding communication channel; and
in response to detecting one of, a preamble response signal or no signal during a predetermined time on said at least one corresponding communication channel transmitting said data on said at least one corresponding communication channel.

2. A method according to claim 1, wherein each of said channels comprises a time-frequency resource.

3. A method according to claim 1 or 2, wherein said step of transmitting said data is performed in response to detecting at least one of said preamble response signal.

4. A method according to claim 1 or 2, wherein said step of transmitting said data is performed in response to detecting no signal during a predetermined time.

5. A method according to claim 4, comprising a further step of setting said predetermined time to one of a plurality of values, said plurality of values depending on a desired quality of service.

6. A method according to claim 4 or 5, wherein in response to detecting a signal on said communication channel, ceasing to transmit said preamble signature on said preamble channel for a backoff time, and following said backoff time transmitting said preamble signature on said preamble channel again and monitoring for signals on said at least one communication channel.

7. A method according to claim 3, wherein in response to detecting said response signal, transmitting said data in a next predetermined communication time slot.

8. A method according to claim 3 or 7, wherein in response to not detecting said response signal within a predetermined detection time, not transmitting said preamble signature for a backoff time and following said backoff time re-transmitting said preamble signature on said preamble channel and monitoring for signals on said at least one communication channel.

9. A method according to any preceding claim, comprising continuing to transmit said preamble signature via said preamble channel while said data is transmitted via said at least one communication channel and stopping transmitting said preamble signature following transmission of said data to release said corresponding communication channel.

10. A method according to any preceding claim, wherein said step of selecting said preamble comprises selecting one of said plurality of preambles in dependence upon one of:
a collision probability stored associated with at least some of said plurality of preambles;
an availability of said preamble;
an application to be performed; or
an identity of said user equipment.

11. A method according to any preceding claim, comprising a step of monitoring at least one of said preamble channel and marking said preambles currently being used as being unavailable prior to selecting said one of said plurality of preambles, said selecting step comprising selecting said preamble from said plurality of preambles that are not currently marked as unavailable.

12. A method according to any preceding claim, comprising the further steps of:
monitoring at least one of said preamble channel; and
in response to detecting a preamble signature indicating a data communication in which said user equipment is interested, monitoring said at least one corresponding communication channel.

13. A method according to any preceding claim 12, comprising the further steps of:
prior to monitoring said corresponding communication channel responding to said preamble signature in which said user equipment is interested by sending a response to said preamble signature on one of said at least one corresponding communication channels.

14. A computer program product storing a computer program which when executed by a computer controls said computer to perform steps in the method according to any one of claims 1 to 13.

15. A user equipment configured to communicate wirelessly with at least one further user equipment, said user equipment comprising:
a preamble store for storing details of a plurality of preambles and corresponding transmission resource blocks;
preamble selection logic for selecting a preamble from said plurality of stored preambles, said plurality of preambles each being associated with a corresponding block of transmission resources, said block of transmission resources comprising at least one corresponding communication channel;
a port for receiving signals and outputting signals on one of a plurality of channels, said port being a half duplex port such that for each channel a signal can either be received or transmitted;
said user equipment being configured to broadcast data for receipt by said at least one further user equipment by:
selecting a preamble from said plurality of preambles using said preamble selection logic;
transmitting a preamble signature of said selected preamble via said port on a preamble channel, transmission of said preamble signature indicating to said at least one further user equipment that said user equipment intends to transmit data on said at least one corresponding communication channel; and
detecting signals received on said at least one corresponding communication channel; and
in response to detecting either a preamble response signal or no signal during a predetermined time, transmitting said data on said at least one corresponding communication channel.

## Amended claims

### Amended claims in accordance with Rule 137(2) EPC.

1. A method of broadcasting data from one user equipment (10) for receipt by at least one further user equipment (12) comprising the steps of:
selecting a preamble from a plurality of preambles, said plurality of preambles each identifying a corresponding block of transmission resources said block of transmission resources comprising at least one corresponding communication channel;
transmitting a preamble signature of said selected preamble on a preamble channel, transmission of said preamble signature indicating to said at least one further user equipment that said user equipment intends to transmit data on said at least one corresponding communication channel indicated by said preamble signature, each of said channels comprising half duplex channels configured to transmit data in one direction at one time; and
monitoring for signals received via said at least one corresponding communication channel; and
in response to detecting one of, a preamble response signal or no signal during a predetermined time on said at least one corresponding communication channel transmitting said data on said at least one corresponding communication channel.

2. A method according to claim 1, wherein each of said channels comprises a time-frequency resource.

3. A method according to claim 1 or 2, wherein said step of transmitting said data is performed in response to detecting at least one of said preamble response signal.

4. A method according to claim 1 or 2, wherein said step of transmitting said data is performed in response to detecting no signal during a predetermined time.

5. A method according to claim 4, comprising a further step of setting said predetermined time to one of a plurality of values, said plurality of values depending on a desired quality of service.

6. A method according to claim 4 or 5, wherein in response to detecting a signal on said communication channel, ceasing to transmit said preamble signature on said preamble channel for a backoff time, and following said backoff time transmitting said preamble signature on said preamble channel again and monitoring for signals on said at least one communication channel.

7. A method according to claim 3, wherein in response to detecting said response signal, transmitting said data in a next predetermined communication time slot.

8. A method according to claim 3 or 7, wherein in response to not detecting said response signal within a predetermined detection time, not transmitting said preamble signature for a backoff time and following said backoff time re-transmitting said preamble signature on said preamble channel and monitoring for signals on said at least one communication channel.

9. A method according to any preceding claim, comprising continuing to transmit said preamble signature via said preamble channel while said data is transmitted via said at least one communication channel and stopping transmitting said preamble signature following transmission of said data to release said corresponding communication channel.

10. A method according to any preceding claim, wherein said step of selecting said preamble comprises selecting one of said plurality of preambles in dependence upon one of:
a collision probability stored associated with at least some of said plurality of preambles;
an availability of said preamble;
an application to be performed; or
an identity of said user equipment.

11. A method according to any preceding claim, comprising a step of monitoring at least one of said preamble channel and marking said preambles currently being used as being unavailable prior to selecting said one of said plurality of preambles, said selecting step comprising selecting said preamble from said plurality of preambles that are not currently marked as unavailable.

12. A method according to any preceding claim, comprising the further steps of:
monitoring at least one of said preamble channel; and
in response to detecting a preamble signature indicating a data communication in which said user equipment is interested, monitoring said at least one corresponding communication channel.

13. A method according to claim 12, comprising the further steps of:
prior to monitoring said corresponding communication channel responding to said preamble signature in which said user equipment is interested by sending a response to said preamble signature on one of said at least one corresponding communication channels.

14. A computer program product storing a computer program which when executed by a computer controls said computer to perform steps in the method according to any one of claims 1 to 13.

15. A user equipment (10) configured to communicate wirelessly with at least one further user equipment (12), said user equipment comprising:
a preamble store (30) for storing details of a plurality of preambles and corresponding transmission resource blocks;
preamble selection logic (50) for selecting a preamble from said plurality of stored preambles, said plurality of preambles each being associated with a corresponding block of transmission resources, said block of transmission resources comprising at least one corresponding communication channel;
a port (42) for receiving signals and outputting signals on one of a plurality of channels, said port being a half duplex port such that for each channel a signal can either be received or transmitted;
said user equipment being configured to broadcast data for receipt by said at least one further user equipment by:
selecting a preamble from said plurality of preambles using said preamble selection logic (50);
transmitting a preamble signature of said selected preamble via said port on a preamble channel, transmission of said preamble signature indicating to said at least one further user equipment that said user equipment intends to transmit data on said at least one corresponding communication channel; and
detecting signals received on said at least one corresponding communication channel; and
in response to detecting either a preamble response signal or no signal during a predetermined time, transmitting said data on said at least one corresponding communication channel.
